(19) Europäisches Patentamt / European Patent Office / Office européen des brevets

(11) **EP 2 154 926 B1**

## (12) EUROPEAN PATENT SPECIFICATION

(45) Date of publication and mention
of the grant of the patent:
**23.07.2014 Bulletin 2014/30**

(51) Int Cl.:
***H04W 74/08*** *(2009.01)* ***H04W 28/18*** *(2009.01)*

(21) Application number: **09013504.7**

(22) Date of filing: **07.06.2004**

(54) **Method and apparatus to provide channel access parameter**

Verfahren und Vorrichtung zur Bereitstellung von Kanalzugangsparametern

Procédé et appareil pour fournir un paramètre d'accès à un canal

(84) Designated Contracting States:
**AT BE BG CH CY CZ DE DK EE ES FI FR GB GR
HU IE IT LI LU MC NL PL PT RO SE SI SK TR**

(30) Priority: **30.06.2003 US 608067
24.09.2003 US 668173**

(43) Date of publication of application:
**17.02.2010 Bulletin 2010/07**

(62) Document number(s) of the earlier application(s) in
accordance with Art. 76 EPC:
**04752579.5 / 1 642 420**

(73) Proprietor: **Intel Corporation
Santa Clara, CA 95052 (US)**

(72) Inventors:
• **Ginzburg, Boris
Haifa 32812 (IL)**
• **Kondratiev, Vladimir
Haifa 34521 (IL)**
• **Tolpin, Alexander
Netanya 4300 (IL)**

(74) Representative: **Lam, Alvin et al
RGC Jenkins & Co.
26 Caxton Street
London SW1H 0RJ (GB)**

(56) References cited:
**US-A1- 2002 110 085**

• **HAITAO WU ET AL: "IEEE 802.11 distributed
coordination function(DCF): analysis and
enhancement" ICC 2002. 2002 IEEE
INTERNATIONAL CONFERENCE ON
COMMUNICATIONS. CONFERENCE
PROCEEDINGS. NEW YORK, NY, APRIL 28 - MAY
2, 2002, IEEE INTERNATIONAL CONFERENCE
ON COMMUNICATIONS, NEW YORK, NY : IEEE,
US, vol. VOL. 1 OF 5, 28 April 2002 (2002-04-28),
pages 605-609, XP010589565 ISBN:
0-7803-7400-2**
• **VITSAS V: "Throughput analysis of linear backoff
scheme in wireless LANs" ELECTRONICS
LETTERS, IEE STEVENAGE, GB, vol. 39, no. 1, 9
January 2003 (2003-01-09), pages 99-100,
XP006019540 ISSN: 0013-5194**
• **WEN-KUANG KUO ET AL: "Enhanced backoff
scheme in CSMA/CA for IEEE 802.11"
PROCEEDINGS OF THE SPIE - THE
INTERNATIONAL SOCIETY FOR OPTICAL
ENGINEERING SPIE-INT. SOC. OPT. ENG USA,
vol. 5100, 21 April 2003 (2003-04-21), pages
92-103, XP002300098 ISSN: 0277-786X**

**Description**

**BACKGROUND OF THE INVENTION**

In wired and/or wireless local area networks (e. g. LAN and WLAN, respectively) devices may use an access mechanism to access the network. An example of an access mechanism may be a Carrier Sense Multiple Access with Collision Avoidance (CSMA/CA) and, more specifically, CSMA/CA with a binary exponential backoff method.

In this method, the devices, also termed stations, may use a predefined time slot of a time frame to access the network. This time frame may be known in the art as a contention window (CW). The CW may have two parameters, namely, $CW_{min}$ and $CW_{max}$, wherein $CW_{min}$ may be defined as a minimal size of the CW and $CW_{max}$ may be defined as the maximal size of the CW. The CSMA/CA mechanism may increase $CW_{min}$ until $CW_{max}$ is reached or until receiving an acknowledge (ACK) message indicating successful transmission of a packet. The process of increasing the $CW_{min}$ from its minimum value upward may be repeated for the duration of a transmission of a packet. The optimal CW range depends on the probability of collision in the network. Thus, the fixed pre-defined values of $CW_{aun}$ and $CW_{max}$ may result in an incensement of the number of collisions. Furthermore, packets may be unnecessarily delayed before being transmitted. Furthermore, the data throughput in the network may be impaired.

Thus, there is a need for better ways to mitigate the above described disadvantages.

US2002/0110085A1 discloses contention adaptation concepts for access to a shared medium, and adaptive algorithms for contention access using probabilities and backoffs including the features of the preamble of the independent claims of the present invention.

From Kuo et al "Enhanced Backoff Scheme in CSMA/CA for IEEE 802.11", Proceedings of the SPIE, vol. 5100, April 21, 2003, pages 92 - 103, an enhanced CSMA/CA protocol improving the exponential backoff scheme by dynamically adjusting the contention window CW around the optimal value is known.

**STATEMENT OF INVENTION**

The present invention is defined by the features of the independent claims. Preferred advantageous embodiments thereof are defined by the features of the dependent claims.

**BRIEF DESCRIPTION OF THE DRAWINGS**

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:

FIG. 1 is a schematic illustration of a wireless communication system that may include a wireless mobile unit according to an exemplary embodiment of the present invention;

FIG. 2 is a schematic illustration of an exemplary timing diagram of a distributed coordination function (DCF) according to embodiments of the present invention;

FIG. 3 is a block diagram of a receiver according to an exemplary embodiment of the present invention;

FIG. 4 is a flowchart of a method according to some exemplary embodiments of the present invention; and

FIG. 5 is a flowchart of a method according to further exemplary embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

**DETAILED DESCRIPTION OF EMBODIMENTS OF THE INVENTION**

In the following detailed description, numerous specific details are set forth in order to provide a thorough understanding of the invention. However it will be understood by those of ordinary skill in the art that the present invention may be practiced without these specific details. In other instances, well-known methods, procedures, components and circuits have not been described in detail so as not to obscure the present invention.

Some portions of the detailed description, which follow, are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

It should be understood that the present invention may be used in a variety of applications. The circuits and techniques disclosed herein may be used in many apparatuses such as stations of a radio system. Stations intended to be included within the scope of the present invention include, by way of example only, wireless local area network (WLAN) stations, two-way radio stations, digital system stations, analog system stations, cellular radiotelephone stations, and the like.

Types of WLAN stations intended to be within the scope of the present invention include, although are not limited to, stations for receiving and transmitting spread spectrum signals such as, for example, Frequency Hopping Spread Spectrum (FHSS), Direct Sequence Spread Spectrum (DSSS), Orthogonal frequency-division multiplexing (OPDM) and the like.

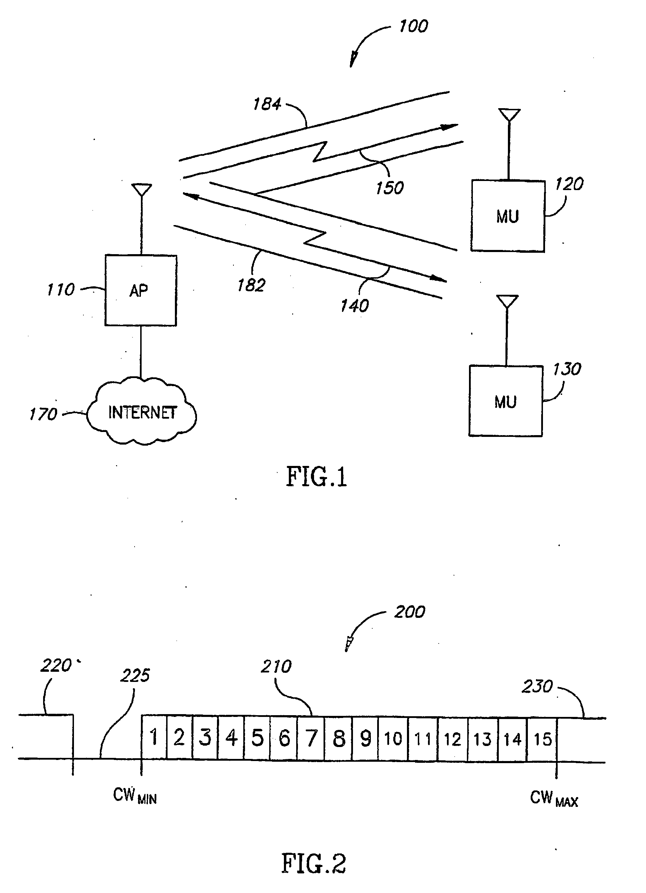

Turning to FIG. 1, a wireless communication system 100, for example, a WLAN communication system is shown. The exemplary WLAN communication system 100 may be defined, e.g., by IEEE 802.11 -1999 standard, as a basic service set (BSS). For example, the BSS may include at least one access point (AP) 110 and at least one mobile unit (MU) 130. MUs 130 and 120 may be in communication with one another and/or with the Internet 170 through AP 110. For example, AP 110 may control the communication by sending control commands that may include access parameters via beacons 140, 150, which may be transmitted through channels 182, 184, respectively, if desired. In other embodiments of the present invention, wireless communication system 100 may include two or more APs and two or more MUs, if desired, in which case the arrangement of wireless communication system 100 may be referred to by IEEE 802.11 -1999 standard as an extended service set (ESS).

Turning to FIG. 2, an illustration of an exemplary timing diagram of a distributed coordination function (DCF) according to embodiments of the present invention is shown. A CSMA/CA with binary exponential backoff may be used. This access mechanism may also be known in the art as a "listen before talk" access mechanism that permits MUs and APs to transmit when a wireless station such as, for example, a mobile unit, an access point, etc., may be free from transmission. This mechanism may prevent collisions between transmission from stations (e.g., MUs, APs, etc.) of wireless communication system 100.

The access mechanism may transmit one or more channel access parameters 200 to stations of wireless communication system 100. In the exemplary timing diagram of FIG. 2, channel access parameter 200 is a contention window (CW). However, in embodiments of the invention, channel access parameter may be $CW_{min}$, $CW_{max}$, a backoff parameter, and the like.

In some examples, $CW_{min}$ may also be a backoff parameter.

CW 200 may include at least two access parameters, e.g., $CW_{min}$ and $CW_{max}$. In some examples, a minimum value of the $CW_{min}$ parameter may be a multiple of 4 of the number of active stations (e.g. active MUs, APs, etc.). $CW_{min}$ may vary from 15 time slots 210 according to IEEE 802.11a standard, or 31 time slots 210 according to IEEE 802.11b standard, to 1023 time slots 210, if desired. Time slots 210 may be marked with a number which may be selected randomly by the CSMA/CA mechanism. In examples, the binary exponential backoff mechanism of AP 110 may choose a random number, for example, one of time slots 210, which may be allocated to MU 120 for transmission. Based on the random number chosen, for example, slot 210 number 9, MU 120 may wait a predetermined time period which may include a time period 225 and the time until the selected slot (e.g. slots 210 numbered 1 to 8) and the time of selected slot 210, if desired.

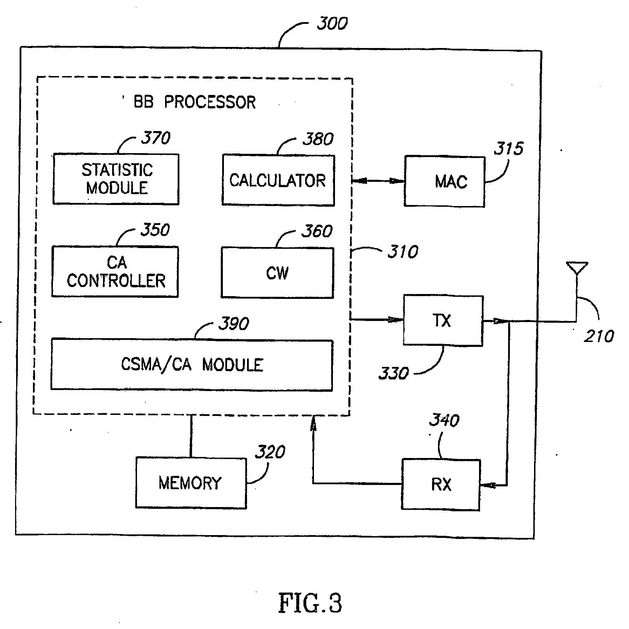

Turning to FIG. 3, a block diagram of an AP 300 according to some embodiments of the present invention is shown. At least one antenna 210 that may be used to provide a transmission, for example beacon 140, to one or more mobile units, for example MU 120, may be connected to AP 300. Beacon 140 may include at least one channel access parameter, for example, $CW_{min}$, $CW_{max}$. Antenna 210 may be an omni-directional antenna, a monopole antenna, a dipole antenna, an end fed antenna, a circularly polarized antenna, a microstrip antenna, a diversity antenna and the like.

AP 300 may include a transmitter 330 and a receiver 340, a processor 310, for example a base-band (BB) processor, medium access control (MAC) 315 and a memory 320.

MAC 315 and BB processor 310 may operate to provide a channel access parameter to MU 120 and/or MU 130 of wireless communication system 100. In some embodiments of the present invention, MAC 315 and BB Processor 310 may include a channel access (CA) controller 350. CA controller 350 may select a channel access parameter from a CW 360. CA controller 350 may dynamically adjust parameters of CW 360 , e.g., $CW_{min}$, $CW_{max}$.

Receiver 340 may receive packets, for example, one or more packets included in transmission 220. A statistic module 370 may accumulate a packet time of the received packet with a packet time parameter stored in memory 320, if desired. Statistic module 370 may provide the packet time parameter to calculator 380 which may calculate a collision probability parameter 380.

Calculator 380 may estimate a throughput loss parameter based on the packet time parameter and may calculate the probability of collisions based on the estimated throughput loss parameter, if desired. In other embodiment of the invention, calculator 380 may estimate a network load parameter, for example, the network load of wireless communication network 100, based on the packet time parameter and the collision probability parameter. Based on the network load parameter, calculator 380 may estimate the throughput loss parameter, if desired.

CA controller 350 may operate according to mechanism provided by a CSMA/CA module 390. For example, CSMA/CA module 390 may include a CSMA/CA mechanism incorporating collision avoidance with exponential backoff. CSMA/CA module 390 may control the operation of transmitter 330. CA controller 350 may be adjusted based on a probability of collisions between two or more packets transmitted from at least two MUs, e.g., MUs 120,130. In addition, CA controller 350 may adjust $CW_{min}$ and $CW_{max}$ based on the network load parameter, if desired.

BB processor 310 may be a digital signal processor or the like. Furthermore, Statistic module 370, calculator 380, CW 360, CSM/CA module 390 and CA controller 350 may be implemented by hardware, by software, or by any suitable combination of hardware and/or software.

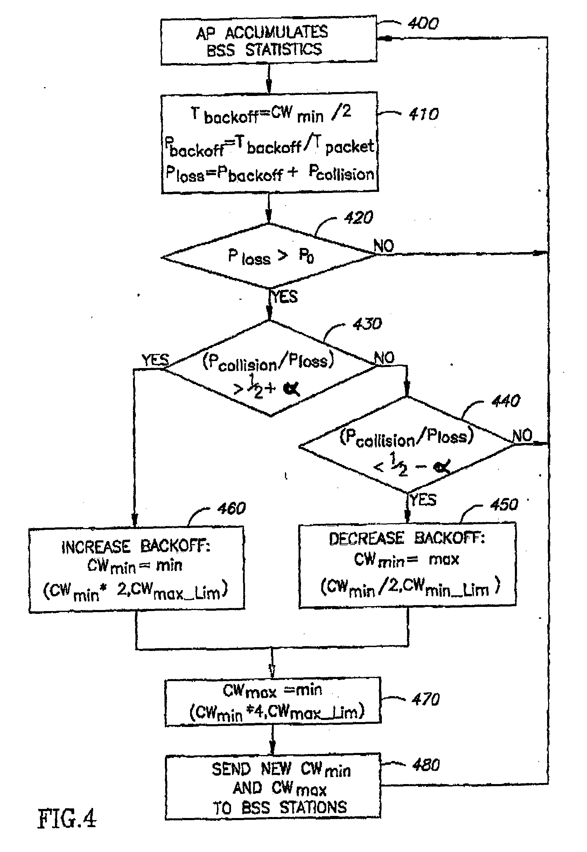

Tuming to FIG. 4 an exemplary method of adjustment of CW parameters according to some embodiment of the present invention is shown. AP 110 may use the method described below to adjust the CW parameters according to a basic service set (BSS load.

AP 110 may accumulate the statistics for a period of N beacons, for example, a packet time $T_{packet}$ (block 400). In the end of the period of N beacons, AP 110 may estimate and/or calculate a probability of collisions parameter $P_{collision}$. Accordingly, AP 110 may calculate a backoff time $T_{backoff}$, a backoff parameter $P_{backoff}$, and a throughput loss parameter $P_{loss}$, which may be based on a packet loss statistic, if desired (block 410).

If desired, AP 110 may calculate $T_{backoff}$, $P_{backoff}$, and $P_{loss}$ according to the following exemplary equations:

$$T_{backoff} = \tfrac{1}{2}\, CW_{min} \qquad\qquad (1)$$

$$P_{backoff} = T_{backoff}/T_{packet} \qquad\qquad (2)$$

$$P_{loss} = P_{backoff} + P_{collision} \qquad\qquad (3)$$

wherein $T_{packet}$ may be an average time for all transmitted and successfully received packets.

AP 110 may compare $P_{loss}$ to a predetermined threshold of packet loss, Po (block 420). In addition, AP 110 may check if a network load as depicted by $P_{colisions}/P_{loss}$ may be above or below a predetermined threshold, for example, $\tfrac{1}{2}+\alpha$ (block 430, wherein a may be referred to as a hysteresis coefficient, which may be used to avoid jittering, if desired. If the network load is above the predetermined threshold $\tfrac{1}{2}+\alpha$, AP 110 may increase $CW_{min}$, for example, according to the following exemplary function (block 460):

$$CW_{min} = min(CW_{min} * 2,\ CW_{max\_Lim}) \qquad\qquad (4)$$

If the network load is below the predetermined threshold, $\tfrac{1}{2}+\alpha$, and also below a second threshold, e.g., $\tfrac{1}{2}-a$ (block 440), AP 110 may decrease $CW_{min}$, e.g., according to the following exemplary function (block 450):

$$CW_{min} = max(CW_{min}/2,\ CW_{min\_Lim}) \qquad\qquad (5)$$

wherein $CW_{min\_Lim}$ may be the lower limit of $CW_{min}$, if desired.

AP 110 may dynamical adjust $CW_{min}$ and $CW_{max}$ according to changes in the network load (e.g., $P_{colisions}/P_{loss}$). AP 110 may dynamically adjust $CW_{max}$ according to this exemplary function:

$$CW_{max} = min(CW_{min} * 4,\ CW_{max\_Lim}) \qquad\qquad (6),$$

wherein $CW_{max\_Lim}$ may be a maximum value of $CW_{max}$ (block 470). AP 110 may transmit a beacon with the dynamically

adjusted parameters $CW_{min}$ and $CW_{max}$ to BSS stations, e.g., MUs 120, 130, if desired (block 480).

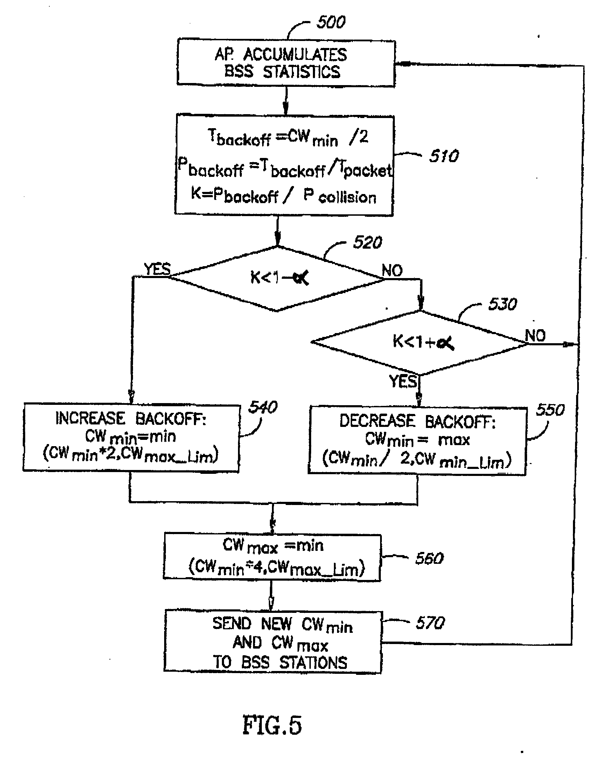

Turning to FIG. 5 an exemplary method of adjustment of CW parameters is shown. The method may dynamically adjust the $CW_{min}$ and $CW_{max}$ based on equilibrium between $P_{backoff}$, which may be related to a channel access backoff mechanism, and $P_{collisions}$, which may be related to collisions between two or more packets, wherein $P_{backoff}$ and $P_{collisons}$ may be referred to as packet loss parameters, if desired. For example, K may be defined as the equilibrium and may be denoted

$$K = P_{backoff}/P_{collision} \qquad (7).$$

AP 110 may accumulate the BSS statistic (block 500) and may calculate $T_{backoff}$, $P_{backoff}$ and K based on the statistic (block 510). AP 110 may compare the equilibrium K to a threshold $1-\alpha$ (block 520) and may increase $CW_{min}$ (block 540) if K is below the $1-\alpha$ threshold. If K is above the $1-\alpha$ threshold, AP 110 may compare equilibrium K to another threshold, e.g., $1+a$ (block 530) and may decrease $CW_{min}$ (block 550) if K is below the $1+\alpha$ threshold, if desired.

Blocks 500, 510, 520, 530 may be repeated for additional received packets in the transmission. AP 110 may adjust $CW_{max}$ based on the adjusted $CW_{min}$ (block 560) and may send $CW_{min}$ and $CW_{max}$ to the BSS station, e.g., MUs 120,130 (block 570), if desired.

## Claims

1. A method of adjusting first and second contention-window parameters, $CW_{min}$, $CW_{max}$, of a Carrier-Sense-Multiple-Access with Collision-Avoidance mechanism of a station operating at a wireless local area network, comprising:

   estimating a network load of the wireless local area network; **characterised by**
   adjusting the first and second contention-window parameters, $CW_{min}$, $CW_{max}$, according to said network load.

2. The method of claim 1 comprising:

   receiving the first and second contention-window parameters and a backoff parameter; and
   transmitting a packet according to the received first and second contention-window parameters.

3. The method of claim 1 comprising:

   estimating the network load based on a ratio between a probability of collision parameter, $P_{collision}$, and a throughput loss parameter, $P_{loss}$; and
   adjusting the first and second contention-window parameters, $CW_{min}$, $CW_{max}$, according to said network load, wherein the adjusting includes:

   increasing a value of the first contention window parameter, $CW_{min}$, when the network load is above a first threshold;
   decreasing said value of the first contention window parameter, $CW_{min}$, when said network load is below said first threshold and below a second threshold; and
   dynamically adjusting the second contention-window parameter, $CW_{max}$.

4. The method of claim 3, wherein estimating the network load comprises:

   calculating the throughput loss parameter, $P_{loss}$, based on the probability of collision parameter, $P_{collision}$.

5. The method of claim 4, wherein the calculating comprises:

   collecting statistics of a packet time, $T_{packet}$, to provide an average packet time;
   estimating said probability of collision parameter, $P_{collision}$; and
   estimating the network load based on the average packet time and the probability of collision parameter, $P_{collision}$.

6. The method of claim 1, wherein adjusting the first and second contention-window parameters, $CW_{min}$, $CW_{max}$, comprises:

dynamically adjusting the first and second contention-window parameters, $CW_{min}$, $CW_{max}$, based on an equilibrium, K, between a backoff parameter, $P_{backoff}$, related to a channel access backoff mechanism and a packet collision parameter, $P_{collision}$, related to collision between two or more packets.

7. The method of claim 6, comprising:

calculating said equilibrium parameter, K;
comparing the equilibrium parameter, K, to a threshold; and
adjusting the first and second contention-window parameters, $CW_{min}$, $CW_{max}$, based on the comparison.

8. The method of claim 6, wherein dynamically adjusting the first and second contention-window parameters, $CW_{min}$, $CW_{max}$, comprises:

adjusting the backoff parameter, $P_{backoff}$, based on the network load; and
adjusting a size of the contention window based on the adjusted backoff parameter, $P_{backoff}$.

9. A method in accordance with claim 3 comprising:

dynamically adjusting a parameter of a contention window based on the probability of collision, $P_{collision}$, between two or more packets; and
determining a channel access parameter based on the adjusted parameter of the contention window.

10. The method of claim 9, wherein determining the channel access parameter comprises:

calculating the probability of collision parameter, $P_{collision}$, based on an estimated throughput loss parameter, $P_{loss}$, which is based on the collisions.

11. The method of claim 10, wherein the calculating comprises:

collecting statistics of a packet time to provide a packet time parameter, $T_{packet}$; and
estimating the network load based on the packet time parameter, $T_{packet}$, and the probability of collision parameter, $P_{collision}$.

12. A device (300) comprising a channel access controller (350) operating according to the method of any one of claims 1 to 11.


**Patentansprüche**

1. Verfahren zum Einstellen erster und zweiter Konkurrenzfensterparameter, $CW_{min}$, $CW_{max}$ eines Trägererfassung-Mehrfachzugangs mit Kollisionsvermeidungsmechanismus einer Station, die in einem drahtlosen Nahbereichsnetz arbeitet, das Folgendes umfasst:

Schätzen einer Netzlast des drahtlosen Nahbereichsnetzes; **gekennzeichnet durch**
Einstellen des ersten und des zweiten Konkurrenzfensterparameters $CW_{min}$, $CW_{max}$ in Übereinstimmung mit der Netzlast.

2. Verfahren nach Anspruch 1, das Folgendes umfasst:

Empfangen des ersten und des zweiten Konkurrenzfensterparameters und eines Backoff-Parameters; und
Senden eines Pakets in Übereinstimmung mit dem empfangenen ersten und zweiten Konkurrenzfensterparameter.

3. Verfahren nach Anspruch 1, das Folgendes umfasst:

Schätzen der Netzlast basierend auf einem Verhältnis zwischen einem Kollisionswahrscheinlichkeitsparameter, $P_{collision}$, und einem Durchsatzverlustparameter, $P_{loss}$, und
Einstellen des ersten und des zweiten Konkurrenzfensterparameters, $CW_{min}$, $CW_{max}$, gemäß der Netzlast,

wobei das Einstellen Folgendes umfasst:

Erhöhen eines Werts des ersten Konkurrenzfensterparameters, $CW_{min}$, wenn die Netzlast oberhalb eines ersten Schwellenwerts ist;
Verringern des Werts des ersten Konkurrenzfensterparameters, $CW_{min}$, wenn die Netzlast unterhalb des ersten Schwellenwerts und unterhalb eines zweiten Schwellenwerts ist; und
dynamisches Einstellen des zweiten Konkurrenzfensterparameters, $CW_{max}$.

4. Verfahren nach Anspruch 3, wobei das Schätzen der Netzlast Folgendes umfasst:

Berechnen eines Durchsatzverlustparameters, $P_{loss}$, basierend auf dem Kollisionswahrscheinlichkeitsparameter, $P_{collision}$.

5. Verfahren nach Anspruch 4, wobei das Berechnen Folgendes umfasst:

Erheben von Statistik einer Paketzeit, $T_{packet}$, um eine mittlere Paketzeit bereitzustellen;
Schätzen des Kollisionswahrscheinlichkeitsparameters, $P_{collision}$, und
Schätzen der Netzlast basierend auf der mittleren Paketzeit und dem Kollisionswahrscheinlichkeitsparameter, $P_{collision}$.

6. Verfahren nach Anspruch 1, wobei das Einstellen des ersten und zweiten Konkurrenzfensterparameters, $CW_{min}$, $CW_{max}$, Folgendes umfasst:

dynamisches Einstellen des ersten und des zweiten Konkurrenzfensterparameters, $CW_{min}$, $CW_{max}$, basierend auf einem Gleichgewicht, K,
zwischen einem Backoff-Parameter, $P_{backoff}$, der sich auf einen Kanalzugangs-Backoff-Mechanismus bezieht, und einem Paketskollisionsparameter, $P_{collision}$, der sich auf eine Kollision zwischen zwei oder mehr Paketen bezieht.

7. Verfahren nach Anspruch 6, das Folgendes umfasst:

Berechnen des Gleichgewichtsparameters, K;
Vergleichen des Gleichgewichtsparameters, K, mit einem Schwellenwert; und
Einstellen des ersten und des zweiten Konkurrenzfensterparameters, $CW_{min}$ $CW_{max}$, basierend auf dem Vergleich.

8. Verfahren nach Anspruch 6, wobei das dynamische Einstellen des ersten und des zweiten Konkurrenzfensterparameters, $CW_{min}$, $CW_{max}$, Folgendes umfasst:

Einstellen des Backoff-Parameters basierend auf der Netzlast; und
Einstellen einer Größe des Konkurrenzfensters basierend auf dem eingestellten Backoff-Parameter, $P_{backoff}$.

9. Verfahren nach Anspruch 3, das Folgendes umfasst:

dynamisches Einstellen eines Parameters eines Konkurrenzfensters basierend auf dem Kollisionswahrscheinlichkeitsparameter, $P_{collision}$, zwischen zwei oder mehr Paketen; und
Bestimmen eines Kanalzugangsparameters basierend auf dem eingestellten Parameter des Konkurrenzfensters.

10. Verfahren nach Anspruch 9, wobei das Bestimmen des Kanalzugangsparameters Folgendes umfasst:

Berechnen des Kollisionswahrscheinlichkeitsparameters $P_{collision}$ basierend auf einem geschätzten Durchgangsverlustparameter $P_{loss}$, der auf den Kollisionen basiert.

11. Verfahren nach Anspruch 10, wobei das Berechnen Folgendes umfasst:

Erheben von Statistik einer Paketzeit, um einen Paketzeitparameter $T_{packet}$, bereitzustellen; und
Schätzen der Netzlast basierend auf dem Paketzeitparameter, $Tp_{acket}$, und dem Kollisionswahrscheinlichkeitsparameter, $P_{collision}$.

**12.** Vorrichtung (300), die eine Kanalzugangssteuereinheit (350) umfasst, die in Übereinstimmung mit dem Verfahren nach einem der Ansprüche 1 bis 11 arbeitet.

## Revendications

**1.** Procédé pour régler des premier et second paramètres de fenêtre de contention, $CW_{min}$, $CW_{max}$, d'un accès multiple avec écoute de la porteuse et évitement de collision d'une station fonctionnant au niveau d'un réseau local sans fil, comprenant l'étape suivante

estimer une charge de réseau du réseau local sans fil ; **caractérisé par** l'étape suivante :
régler les premier et second paramètres de fenêtre de contention, $CW_{min}$, $CW_{max}$, conformément à ladite charge de réseau.

**2.** Procédé selon la revendication 1 comprenant les étapes suivantes :

recevoir les premier et second paramètres de fenêtre de contention et un paramètre de délai d'attente ; et
transmettre un paquet conformément aux premier et second paramètres de fenêtre de contention reçus.

**3.** Procédé selon la revendication 1, comprenant les étapes suivantes :

estimer la charge de réseau sur la base d'un ratio entre un paramètre de probabilité de collision, $P_{collision}$, et un paramètre de perte de débit, $P_{loss}$ ; et
régler les premier et second paramètres de fenêtre de contention, $CW_{min}$, $CW_{max}$, conformément à ladite charge de réseau, où le réglage comprend les étapes suivantes :

augmenter une valeur du premier paramètre de fenêtre de contention, $CW_{min}$, lorsque ladite charge de réseau est au-dessus d'un premier seuil ;
réduire ladite valeur du premier paramètre de fenêtre de contention, $CW_{min}$, lorsque ladite charge de réseau est au-dessous dudit premier seuil et au-dessous d'un second seuil ; et
régler, dynamiquement, le second paramètre de fenêtre de contention, $CW_{max}$.

**4.** Procédé selon la revendication 3, dans lequel l'estimation de la charge de réseau comprend l'étape suivante :

calculer le paramètre de perte de débit, $P_{loss}$, sur la base du paramètre de probabilité de collision, $P_{collision}$.

**5.** Procédé selon la revendication 4, dans lequel le calcul comprend les étapes suivantes :

collecter des statistiques d'un temps de paquet, $T_{packet}$, pour délivrer un temps de paquet moyen ;
estimer ledit paramètre de probabilité de collision, $P_{collision}$ ; et
estimer la charge de réseau sur la base du temps de paquet moyen et du paramètre de probabilité de collision, $P_{collision}$.

**6.** Procédé selon la revendication 1, dans lequel le réglage des premier et second paramètres de fenêtre de contention, $CW_{min}$, $CW_{max}$, comprend l'étape suivante :

régler, dynamiquement, les premier et second paramètres de fenêtre de contention, $CW_{min}$, $CW_{max}$, sur la base d'un équilibre, K, entre un paramètre de délai d'attente, $P_{backoff}$, relatif à un mécanisme de délai d'attente d'accès de canal, et à un paramètre de collision de paquet, $P_{collision}$, relatif à une collision entre deux paquets, ou plus.

**7.** Procédé selon la revendication 6, comprenant les étapes suivantes :

calculer ledit paramètre d'équilibre, K ;
comparer le paramètre d'équilibre, K, à un seuil ; et
régler les premier et second paramètres de fenêtre de contention, $CW_{min}$, $CW_{max}$, sur la base de la comparaison.

**8.** Procédé selon la revendication 6, dans lequel le réglage dynamique des premier et second paramètres de fenêtre de contention, $CW_{min}$, $CW_{max}$, comprend les étapes suivantes :

régler le paramètre de délai d'attente, $P_{backoff}$, sur la base de la charge de réseau ; et
régler une taille de la fenêtre de contention sur la base du paramètre de délai d'attente, $P_{backoff}$.

**9.** Procédé selon la revendication 3, comprenant les étapes suivantes :

régler, dynamiquement, un paramètre d'une fenêtre de contention sur la base du paramètre de probabilité de collision, $P_{collision}$, entre deux paquets, ou plus ; et déterminer un paramètre d'accès de canal sur la base du paramètre réglé de la fenêtre de contention.

**10.** Procédé selon la revendication 9, dans lequel la détermination du paramètre d'accès de canal comprend l'étape suivante calculer la probabilité du paramètre de collision, $P_{collision}$, sur la base d'un paramètre de perte de débit estimé, $P_{loss}$, qui est basé sur les collisions.

**11.** Procédé selon la revendication 10, dans lequel le calcul comprend les étapes suivantes :

collecter des statistiques d'un temps de paquet pour délivrer un paramètre de temps de paquet, $T_{packet}$ ; et
estimer la charge de réseau sur la base du paramètre de temps de paquet, $T_{packet}$, et du paramètre de probabilité de collision, $P_{collision}$.

**12.** Dispositif (300) comprenant un contrôleur d'accès de canal (350) fonctionnant selon le procédé selon l'une quelconque des revendications 1 à 11.

FIG.1

FIG.2

FIG.3

FIG.4

```
                    AP ACCUMULATES          400
                    BSS STATISTICS

                    T backoff = CW min /2    410
                    P backoff = T backoff / T packet
                    P loss = P backoff + P collision

                         P loss > P_0     420    NO →

                              YES

          YES    (P collision / P loss)   430    NO
                    > 1/2 + α

                                        (P collision / P loss)   440    NO →
                                           < 1/2 - α

                                              YES        450

          INCREASE BACKOFF:     460      DECREASE BACKOFF:
          CW min = min                    CW min = max
          (CW min * 2, CW max_Lim )       (CW min /2, CW min_Lim )

                    CW max = min           470
                    (CW min * 4, CW max_Lim)

                    SEND NEW CW min        480
                    AND CW max
                    TO BSS STATIONS
```

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20020110085 A1

**Non-patent literature cited in the description**

• **KUO et al.** Enhanced Backoff Scheme in CSMA/CA for IEEE 802.11. *Proceedings of the SPIE,* 21 April 2003, vol. 5100, 92-103